# EUROPEAN PATENT SPECIFICATION

(11) **EP 2 726 737 B1**
(45) Date of publication and mention of the grant of the patent: **12.08.2015**
(21) Application number: 12737899.0
(22) Date of filing: 29.06.2012
(51) Int. Cl.: F03D 9/02, F04B 17/02, F03D 9/00

(54) **HYDRAULIC MOTOR OR PUMP AND WIND TURBINE GENERATOR**
HYDRAULISCHER MOTOR ODER PUMPE UND WINDTURBINENGENERATOR
MOTEUR OU POMPE HYDRAULIQUE ET GÉNÉRATRICE DE TURBINE ÉOLIENNE

(43) Date of publication of application: 07.05.2014
(73) Proprietor: Mitsubishi Heavy Industries, Ltd., Tokyo 108-8215 (JP)
(72) Inventor: NISHIDA, Hideaki, Tokyo 108-8215 (JP); OCHIAI, Hiroyasu, Tokyo 108-8215 (JP)
(74) Representative: Intès, Didier Gérard André
(86) International application number: PCT/JP2012/004220
(87) International publication number: WO 2014/002142

(56) References cited:
- WO-A2-2008/113699
- DE-A1- 2 004 350
- GB-A- 983 310
- US-A- 4 373 428
- US-A1- 2008 031 744

## Description

### Technical Field

The present invention relates to a fluid working machine such as a hydraulic pump and a hydraulic motor, and also to a wind turbine generator using the fluid working machine.

### Background Art

In recent years, from a perspective of preserving the environment, it has become popular to use a power generating apparatus of renewable energy type such as a wind turbine generator utilizing wind power. In the wind turbine generator, kinetic energy of the wind is converted to rotational energy of the rotor which is then converted into electric power by the generator.
In this type of wind turbine generator, a step-up gear was often used as a drive train.
However, with increasing size of the wind turbine generator, a wind turbine generator equipped with a hydraulic transmission using a fluid working machine such as a hydraulic pump and a hydraulic motor is becoming popular in order to reduce weight and cost thereof.

For instance, Patent Literature 1 discloses a hydraulic motor as the fluid working machine. In this type of hydraulic motor, a reciprocating motion of the piston in a cylinder is converted to a rotating motion of a cam and then outputted. The piston contacts the cam via a roller at an engagement surface where a pressing force (a load) from the roller causes wear.
Patent Literature 1 proposes to provide an annular groove on the engagement surface to reduce such wear on the engagement surface. To the groove, the operating oil is supplied from the working chamber via an inner passage formed in the piston. In response to the rotation of the roller, the operating oil in the groove is drawn to the engagement surface to produce a hydrostatic oil pressure. This hydrostatic oil pressure supports the large load acting on the engagement surface to reduce the wear.

A fluid working machine described in Patent Literature 2 also includes a groove where the operating oil is supplied. Although it does not have an annular shape like the groove of Patent Literature 1, this groove of Patent Literature 2 is capable of generating the hydrostatic oil pressure on the engagement surface to reduce the wear in a manner similar to Patent Literature 1.

Although it is not a fluid working machine, a lubrication mechanism in a bearing is described in Patent Literature 3. In this bearing, a loop-shaped groove is formed on a surface of a slide member sliding with a rotation shaft. The lubricant oil is supplied to the groove to reduce the wear generated between the parts.
DE 20 04 350 discloses a radial piston hydraulic pump or motor of a type in which one or more of a plurality of pistons and cylinders are arranged radially on a shaft. The pistons are provided at its outer end with a roller body and the cylinder together with the piston is surrounded by a housing. The interior includes an undulating cam track, against which the rolling elements engage.
US 2008031744 discloses a high-pressure pump having a rotationally driven drive shaft and at least one pump element which has a pump piston driven at least indirectly in a reciprocating motion by the drive shaft which piston is guided in a cylinder bore and with its end remote from the drive shaft defines a pump work chamber. The pump piston is braced at least indirectly on the drive shaft. Extending through the pump piston is at least one line which discharges at the circumference of the pump piston in the cylinder bore spaced apart from the end of the pump piston that defines the pump work chamber and which leads toward the drive shaft to the region where the pump piston is braced.
WO 2008113699 discloses an energy conversion device for wind power systems. The rotational speed of the wind turbine and the output rotational speed of the hydraulic motor are controlled independently of one another. Constant rotational speed of the drive shaft of the generator allows the use of a synchronous generator or asynchronous generator with slip regulation.

### Citation List

### Patent Literature

PTL 1: US 5979295 B
PTL 2: WO 2012/010261 A
PTL 3: US 2009/0074337 A

### Summary

### Technical Problem

In Patent Literature 2, the operating oil is supplied to the annular groove formed on the engagement surface to generate the hydrostatic oil pressure, thereby reducing the wear of the engagement surface. The operating oil reserved in the groove is consumed by being drawn to the engagement surface by the rotation of the roller. Thus, the groove needs to be refilled with new operating oil from the working chamber. However, in Patent Literature 1, the annular groove is refilled with the operating oil via one narrow inner passage formed in the piston and it is difficult to efficiently spread the operating oil throughout the groove. However, forming of the plurality of the inner passages in the piston results in complicated production process and a complex inner structure of the piston and thus, it is not easy.

In Patent Literature 2 and Patent Literature 3, the groove is formed on the engagement surface and the fluid is supplied to the groove. However, for the same reason as the case of Patent Literature 1, it is difficult to efficiently supply sufficient operating oil to the entire groove.

At least some embodiments of the present invention are intended to provide a fluid working machine and a wind turbine generator, being capable of effectively reducing the wear of the engagement surface and of achieving an extended lifetime by supplying the fluid efficiently to the groove formed on the engagement surface of the piston engaging with the roller with a simple structure.

### Solution to Problem

According to an embodiment of the present invention, a fluid working machine according to claim 1 is provided.

In the above fluid working machine, the working fluid is introduced from the working chamber via the inner passage to the communication groove portion of the groove formed on the engagement surface. The communication groove portion is configured to traverse the annular groove portion and also along the rotation direction of the roller. Thus, the communication groove portion merges into the annular groove portion at more than one place. Therefore, the working fluid supplied from the inner passage is introduced to different parts of the annular groove portion via the communication groove portion, respectively. Working fluid supplied from the inner passage is introduced to each of the different parts of the annular groove portion via the communication groove portion. By this, the working fluid can effectively spread throughout the groove. As a result, it is possible to replenish the working fluid to the groove effectively and to form the hydrostatic oil pressure film thereon in a stable manner.

As a result, in the above fluid working machine, it is possible to reduce the wear of the engagement surface having insufficient hydrodynamic effect effectively by the hydrostatic effect and also to achieve an extended lifetime by supplying the fluid efficiently to the groove formed on the engagement surface of the piston engaging with the roller, with a simple structure.

In an embodiment, a plurality of the grooves is provided along the rotation direction of the roller.

The position on the engagement surface where the load from the cam acts cyclically changes, in accordance with a rotation phase of the cam, along the rotation direction of the roller. In the above fluid working machine, by providing the grooves on the engagement surface in accordance to change of the position where the pressing force acts, a hydrostatic pressure is generated in a large area of the engagement surface, thereby reducing the wear of the engagement surface.

In an embodiment, the piston comprises a plurality of the inner passages corresponding to the plurality of the grooves, respectively and the working fluid is introduced from the working chamber to the plurality of the grooves via the plurality of the inner passages, respectively.

In the above fluid working machine, by forming the inner passages corresponding to the grooves on the engagement surface, the working fluid can be efficiently supplied to each of the grooves.

In an embodiment, the plurality of the grooves includes a first groove arranged on the engagement surface on an upstream side from a center axis of the cylinder in the rotation direction of the roller and a second groove arranged on the engagement surface on a downstream side from the center axis of the cylinder in the rotation direction of the roller.

In accordance with a rotation phase of the cam, the position on the engagement surface subjected to the cyclical pressing force changes between the upstream side and the downstream side with respect to the cylinder axis in the rotation direction of the roller. Thus, it is preferable to arrange the groove so as to cover an area as large as possible, in the area where the pressing force possibly acts on the engagement surface. From this perspective, by arranging the first groove and the second groove on the upstream side and the downstream side of the engagement surface, respectively, in the rotation direction of the roller, it is possible to cover a large area of the engagement surface where the pressing force acts. As a result, regardless of the rotation phase of the cam, it is possible to form the hydrostatic oil pressure over the large area of the engagement surface in a stable manner.

In an embodiment, the first groove may be formed wider than the second groove. As described above, in accordance with a rotation phase of the cam, the position on the engagement surface subjected to the cyclical pressing force changes along the rotation direction of the roller. During a pump stroke where the piston moves from a bottom dead center toward a top dead center, the pressing force from the roller acts in an area of the engagement surface where the first groove is formed (an upstream side of the engagement surface from the cylinder axis in the rotation direction of the roller). In contrast, during an intake stroke where the piston moves from the top dead center toward the bottom dead center, the pressing force from the roller acts in an area of the engagement surface where the second groove is formed (a downstream side of the engagement surface from the cylinder axis in the rotation direction of the roller). Further, the engagement surface is subjected to larger pressing force during the pump stroke where the piston moves from the bottom dead center toward the top dead center than during the intake stroke where the piston moves from the top dead center toward the bottom dead center.

In view of the fact that the large load is experienced on the upstream side of the engagement surface from the cylinder axis in the rotation direction of the roller, the overall area defined within the outer periphery of the first groove is designed to be larger than the overall area defined within the outer periphery of the second groove. AA larger overall support area provides a larger hydrostatic supporting force. Having a larger hydrostatic supporting force for the larger upstream load, and a smaller hydrostatic supporting force for the smaller upstream load provides a balanced arrangement which enables a wedge shaped oil film to be formed, for efficient hydrodynamic lift. As a result, even in the area where the load from the roller is large, the hydrostatic oil pressure film can be formed as needed to support such load. As a result, the wear of the engagement surface can be effectively reduced.

In an embodiment, the engagement surface is a curved surface surrounding the roller along a circumferential direction of the roller, and the groove is arranged at least in an area including a line of intersection between the engagement surface and a plane which is perpendicular to a center axis of the cylinder and which includes a rotation axis of the roller.

The pressing force is loaded from the cam in the area including the line of intersection between the engagement surface and the plane perpendicular to the center axis of the cylinder and including the rotation axis of the roller. The pressing force includes a large component of the direction perpendicular to the cylinder axis and thus, the piston is prone to wear in such area. In the above fluid working machine, by forming the grooves in the area where the wear easily develops, the wear of the engagement surface can be effectively reduced, thereby achieving an enhanced lifetime thereof.

In an embodiment, the at least one groove extends from a first area toward a second area on the engagement surface, the first area including a line of intersection between the engagement surface and a plane which is perpendicular to a center axis of the cylinder and includes a rotation axis of the roller, the second area including an intersection point between the center axis of the cylinder and the engagement surface.

In the above fluid working machine, by forming the at least one groove to extend from the first area located away from the cylinder axis to the second area located nearer to the cylinder axis, the load from the roller can be supported in the large area of the engagement surface.

In an embodiment, the above fluid working machine may further include a flow-restricting member for adjusting an amount of the working fluid to be introduced through the inner passage.

In the above fluid working machine, the amount of the working fluid to be introduced can be adjusted by the orifice so as to obtain a superior wear reduction effect.

In an embodiment, the piston may further comprise a chamber forming part which forms the working chamber with an inner wall of the cylinder, and a roller holding part which is arranged between the chamber forming part and the cam and which holds the roller. The piston may be formed with a stepped portion between the roller holding part and the chamber forming part so that the roller holding part is formed with a larger diameter than the chamber forming part. The chamber forming part may have a piston ring groove which is formed on an outer periphery of the chamber forming part on a working chamber side of the stepped portion. A piston ring may be provided in the piston ring groove.

The roller holding part is desired to have enough durability to withstand the pressing force from the roller. In the above fluid working machine, the roller holding part is formed with a larger diameter than the chamber forming part so as to enhance rigidity thereof which increases durability.

In contrast, the chamber forming part is formed with a smaller diameter than the roller holding part. By forming the chamber forming part with the smaller diameter, it is easier to create a design with space around the working chamber for arranging other parts of the fluid working machine and an inner passage. Other parts of the machine might include a valve mechanism used to supply and discharge the fluid to and from the working chamber or the like.

In an embodiment, the chamber forming part comprises a body portion which is connected to the roller holding part via the stepped portion, and a cover portion which is disposed on the working chamber side of the body portion and forms the piston ring groove with the body portion.

In the above fluid working machine, the piston ring groove is formed by the body portion and the cover portion of the chamber forming part. Thus, to replace the piston ring fitted in the piston ring groove, the cover portion is removed from the body portion and the piston ring becomes easily accessible. By this, it is possible to reduce the workload.

In an embodiment, the roller holding part has a crowned outer periphery whose diameter is reduced with distance from the working chamber.

In the above fluid working machine, by crowning the outer periphery of the roller holding part, it is possible to reduce the risk of the outer periphery of the piston directly contacting the cylinder surface even when the pressing force from the cam causes the piston to incline. Further, by improving the hydrodynamic effect, the wear of the piston and the cylinder can be suppressed.

According to an embodiment of the present invention, a wind turbine generator comprises a hub where at least one blade is mounted, a main shaft connected to the hub, a hydraulic pump attached to the main shaft, at least one hydraulic motor and at least one generator. The hydraulic motor is driven by pressurized oil supplied from the hydraulic pump. The generator is coupled to the hydraulic motor and is driven by rotation of the main shaft upon receiving wind on the blade. And, at least one of the hydraulic pump and the hydraulic generator is the above fluid working machine.

The above fluid working machine is applicable to a wind turbine generator for generating power from wind as a form of renewable energy.

### Advantageous Effects of Invention

In the above fluid working machine, the working fluid is introduced from the working chamber via the inner passage to the communication groove portion of the groove formed on the engagement surface. The communication groove portion is configured to traverse the annular groove portion in a direction along the rotation direction of the roller. Thus, the communication groove portion merges into the annular groove portion at more than one place in order to introduce the working fluid to different parts of the annular groove portion via the communication groove portion. Working fluid is supplied from the inner passage to each of the different parts of the annular groove portion via the communication groove portion. As a result, the working fluid can effectively spread throughout the groove. As a result, it is possible to replenish the working fluid to the groove effectively and to form the hydrostatic oil pressure in a stable manner.

Therefore, in the above fluid working machine it is possible to effectively reduce the wear of the engagement surface and achieve an extended lifetime by use of a simple structure which supplies the fluid efficiently to the groove formed on the engagement surface of the piston engaging with the roller.

### Brief Description of Drawings

[fig.1]Fig. 1 is a schematic view of an overall structure of a wind turbine generator.
[fig.2]Fig. 2 shows an inner structure of a hydraulic motor
[fig.3]Fig.3 is an outline drawing of a piston.
[fig.4A]Fig. 4A is a top view of the piston shown in Fig.3, taken from the outside in a radial direction of a ring cam.
[fig.4B]Fig. 4B is a cross-sectional view taken by line A-A of Fig.4A.
[fig.4C]Fig. 4C is a bottom view of the piston shown in Fig.3, taken from the inside in the radial direction of the ring cam.
[fig.5A]Fig. 5A is a top view of a body portion from the outside in the radial direction of the ring cam.
[fig.5B]Fig. 5B is a cross-sectional view taken by line B-B of Fig.5A.
[fig.6A]Fig. 6A is a top view of a cover portion from the outside in the radial direction of the ring cam.
[fig.6B]Fig. 6B is a cross-sectional view taken by line C-C of Fig.6A.
[fig.7]Fig. 7 is a cross-sectional view of the piston and a roller, schematically showing mechanism for generating a hydrostatic pressure on an engagement surface.
[fig.8A]Fig. 8A is an illustration of a modified example of grooves formed on the engagement surface.
[fig.8B]Fig. 8B is an illustration of another modified example of the grooves formed on the engagement surface.
[fig.8C]Fig. 8C is an illustration of yet another modified example of the grooves formed on the engagement surface.
[fig.8D]Fig. 8D is an illustration of another modified example of the grooves formed on the engagement surface.
[fig.9]Fig. 9 is a side view of the piston.

### Description of Embodiments

At least one embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.

In following embodiments, a wind turbine generator is described as one example of a power generating apparatus of renewable energy type. However, this is not limitative and the present invention is applicable to other types of power generating apparatus of renewable energy type such as a tidal generator, an ocean current generator and a river current generator.

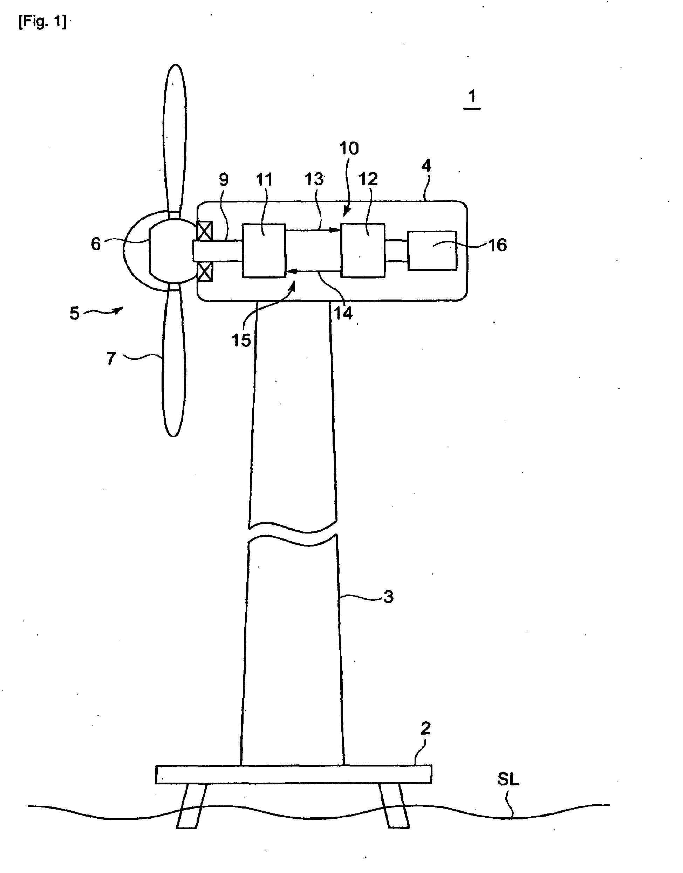

Fig. 1 is a schematic view of an overall structure of a wind turbine generator.

The wind turbine generator 1 is mainly provided with a tower 3 installed on a foundation 2, a nacelle 4 supported by the tower 3 and a rotor 5 rotating by wind energy.

Fig. 1 shows an exemplary case where the wind turbine generator 1 is installed at a sea level SL as an offshore wind turbine generator. However, the wind turbine generator 1 is also installable on shore.

The rotor 5 is formed with at least one blade 7 (for instance, three blades) and a hub 6 supporting the blade 7. The hub 6 is connected to a rotation shaft 9 housed in the nacelle 4. The rotor 5 rotates upon receiving wind on the blade 7, thereby rotating the rotation shaft 9 connected to the hub 6.

The nacelle 4 houses a hydraulic transmission 10 and a generator 16. The hydraulic transmission 10 includes a hydraulic pump 11 connected to the rotation shaft 9, a hydraulic motor 12 connected to the generator 16, and an oil line 15 provided between the hydraulic pump 11 and the hydraulic motor 12. The oil line 15 is formed by a high pressure oil line 13 for connecting a discharge side of the hydraulic pump 11 to an intake side of the hydraulic motor 12, and a low pressure oil line 14 for connecting a discharge side of the hydraulic motor 12 to an intake side of the hydraulic pump 11.

The hydraulic pump 11 is driven by the rotation shaft 9 to generate operating oil of high pressure. This high pressure operating oil is supplied to the hydraulic motor 12 via the high pressure oil line 13 to drive the hydraulic motor 12. Meanwhile, the generator 16 connected to the hydraulic motor 12 is driven to generate electric power. The operating oil discharged from the hydraulic motor 12 is supplied to the hydraulic pump 11 via the low pressure oil line 14, which then pressurizes the operating oil and so the oil flows in such a way through the circuit.

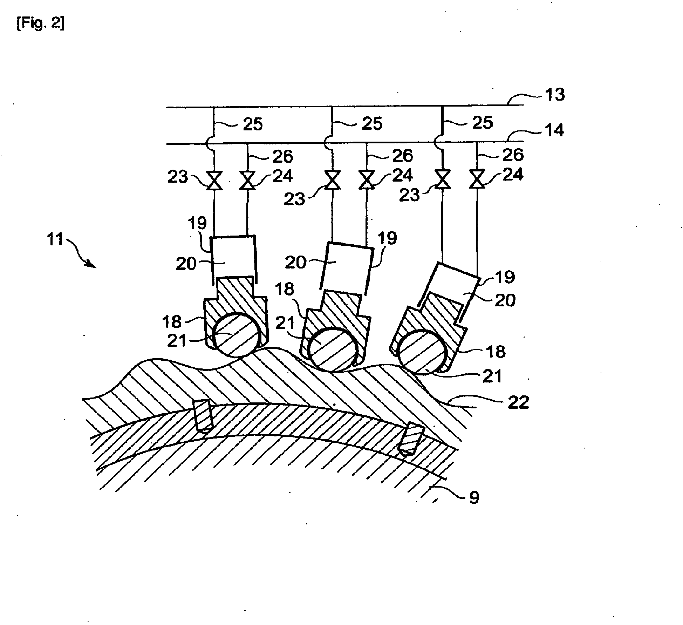

Fig.2 shows an inner structure of the hydraulic pump 11. In the following descriptions, the hydraulic motor 12 is described as one example of the fluid working machine. However, this is not limitative and the structure is applicable to hydraulic motor 12.

The hydraulic pump 11 is provided with a plurality of working chambers 20 formed by pistons 18 and cylinders 19, a plurality of rollers 21 engaged rotatably with the pistons 18, and a ring cam 22 contacting the rollers 21 and rotating with the rotation shaft 9. In each of the working chambers 20, a high pressure valve 23 and a low pressure valve are provided. The high pressure valve 23 is arranged in a high pressure communication path 25 between each working chamber 20 and the high pressure oil line 13. The low pressure valve 24 is arranged in a low pressure communication path 26 between each working chamber 20 and the low pressure oil line 14. Herein, a check valve for allowing the operating oil flowing toward a high pressure oil line 13 from the working chamber 20 is used as the high pressure valve 23, and an electromagnetic valve is used as the low pressure valve 24.

During operation of the hydraulic pump 11, the rotation of the ring cam 22 with the rotation shaft 9 causes the piston 18 to move up and down (reciprocating motion) in synchronization with the cam profile, repeating a pump stroke where the piston 18 moves from a bottom dead center to a top dead center and an intake stroke where the piston 18 moves from the top dead center toward the bottom dead center. Thus, a volume of the working chamber 20 changes cyclically.

In the hydraulic pump 11, each working chamber 20 is switchable between an active state and an idle state by controlling opening and closing of the high pressure valve 23 and the low pressure valve 24. With the working chamber 20 in the active state, by closing the high pressure valve 23 and opening the low pressure valve 24 during the intake stroke, the operating oil is introduced to the working chamber 20 from the low pressure oil line 14. Further, by opening the high pressure valve 23 and closing the low pressure valve 24 during the pump stroke, the operating oil pressurized therein is supplied from the working chamber 20 to the high pressure oil line 13. In contrast, with the working chamber 20 in the idle state, by keeping the high pressure valve 23 closed and the low pressure valve 24 open during both the intake stroke and the pump stroke, the operating oil flows back and forth between the working chamber 20 and the low pressure oil line 14. In other words, the operating oil is not fed to the high pressure oil line 13.

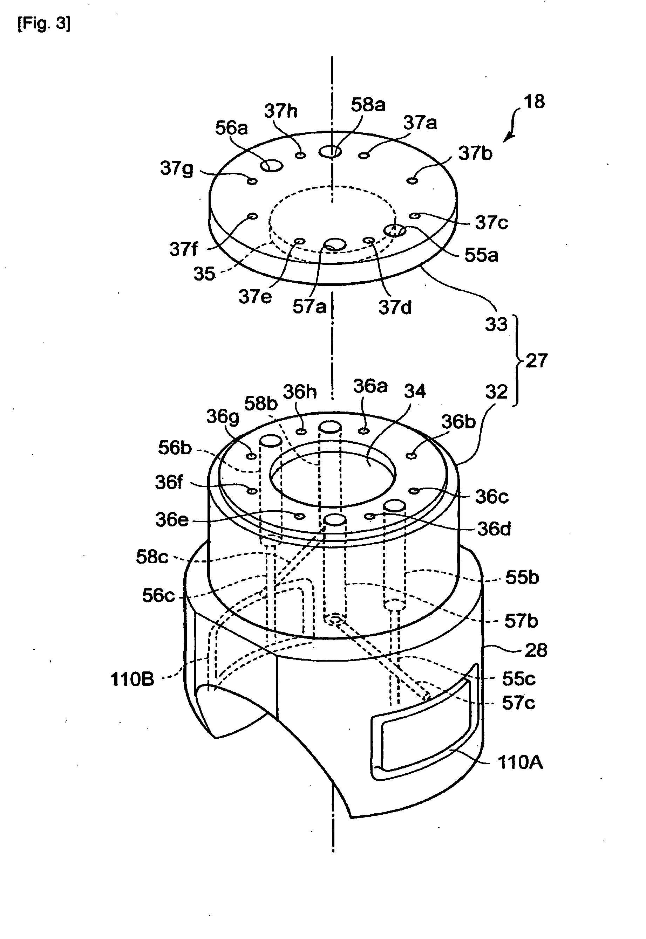

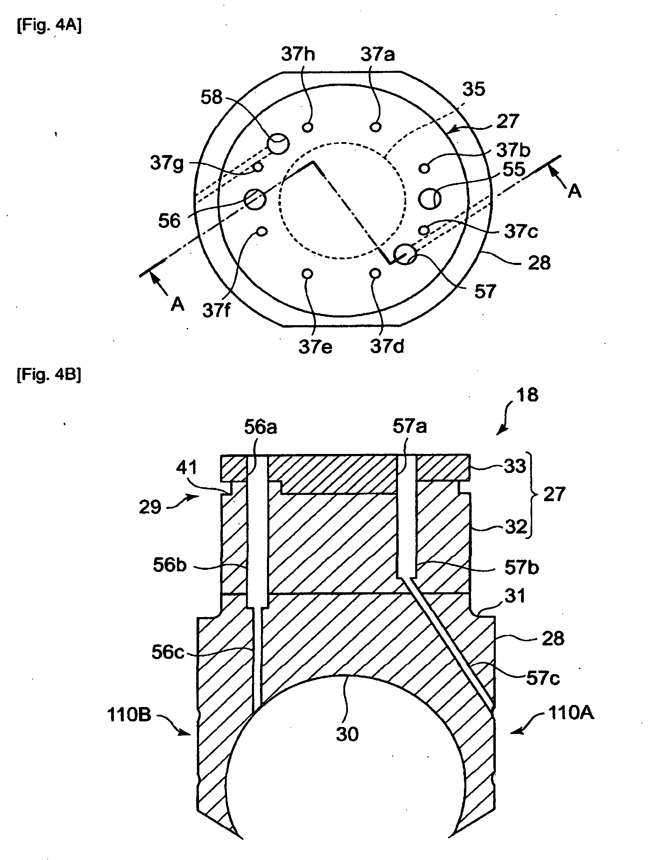

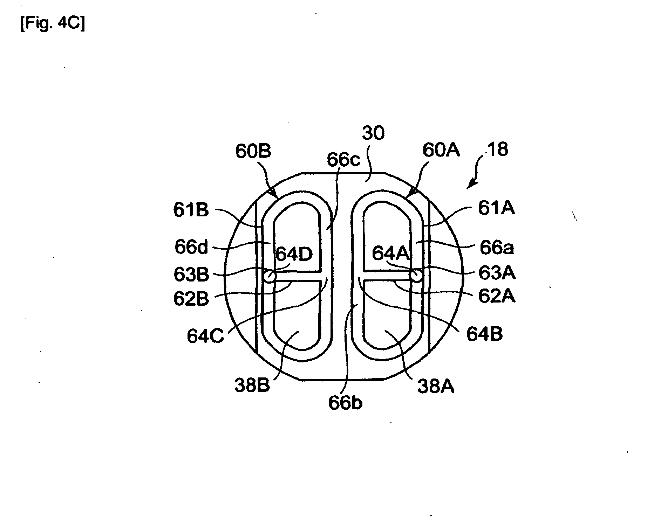

Fig.3 is an outline drawing of the piston 18. Fig. 4A is a top view of the piston 18 shown in Fig.3, taken from the outside in a radial direction of a ring cam 22. Fig. 4B is a cross-sectional view taken by line A-A of Fig.4A. Fig. 4C is a bottom view of the piston 18 shown in Fig.3, taken from the inside in the radial direction of the ring cam 22.

The piston 18 is configured with a chamber forming part 27 and a roller holding part 28. The chamber forming part 27 forms the working chamber 20 with the cylinder 19. The roller holding part 28 holds the roller 21 rotatably and has an engagement surface 30 engaging with the roller 21. The engagement surface 30 is formed into a curved surface having approximately the same curvature as the roller 21 so as to surround the roller in the circumferential direction.

A piston ring groove 29 is formed on an outer periphery of the chamber forming part 27. In the piston ring groove, a piston ring not shown is fitted. The piston ring is, for instance, provided for the purpose of suppressing leaking of the operating oil in the working chamber 20.

Upon receiving a pressing force from the ring cam 22 via the roller 21, the piston ring 18 reciprocates in the cylinder 19. In this process, the roller holding part 28 of the piston 18 contacts the rolling roller and is subjected to the pressing force. Thus, the piston ring 18 is desired to have enough durability to withstand the pressing force. In the embodiment, the roller holding part 28 is formed with a larger diameter than the chamber forming part 27 so as to enhance rigidity thereof. As a result, it is possible to attain enough durability.

In contrast, the chamber forming part 27 is formed with a smaller diameter than the ring holding part 28. By forming the chamber forming part 27 with a smaller diameter as described above, it is easier to create a design with space around the working chamber 20 for arranging other parts of the fluid working machine and an inner passage. The other parts of the fluid working machine include a valve mechanism used to supply and discharge the fluid to and from the working chamber 20 or the like. The inner passages are for supplying and discharging the fluid to and from the working chamber.

In this manner, the piston is formed by a combination of the chamber forming part 27 and the roller holding part 28 which have different diameters. Thus, a stepped portion 31 is formed between the chamber forming part 27 and the roller holding part 28. The stepped portion 31 is round-chamfered.

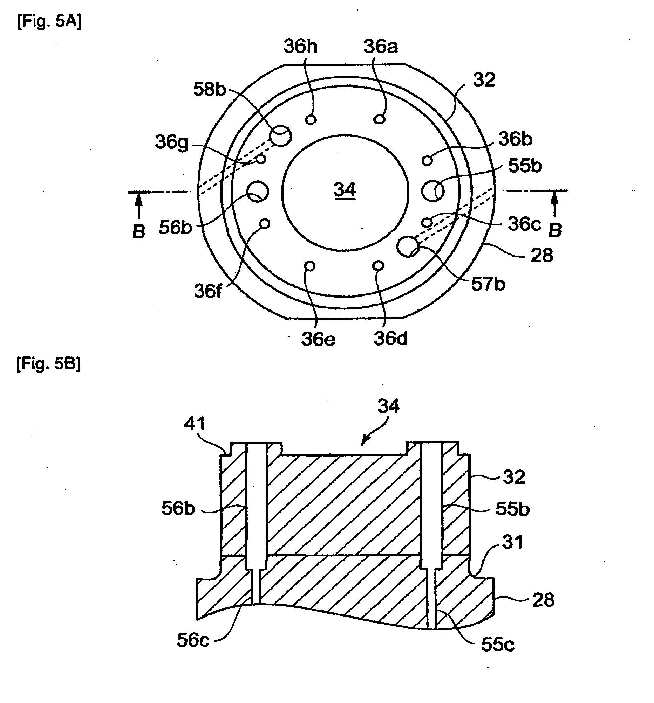

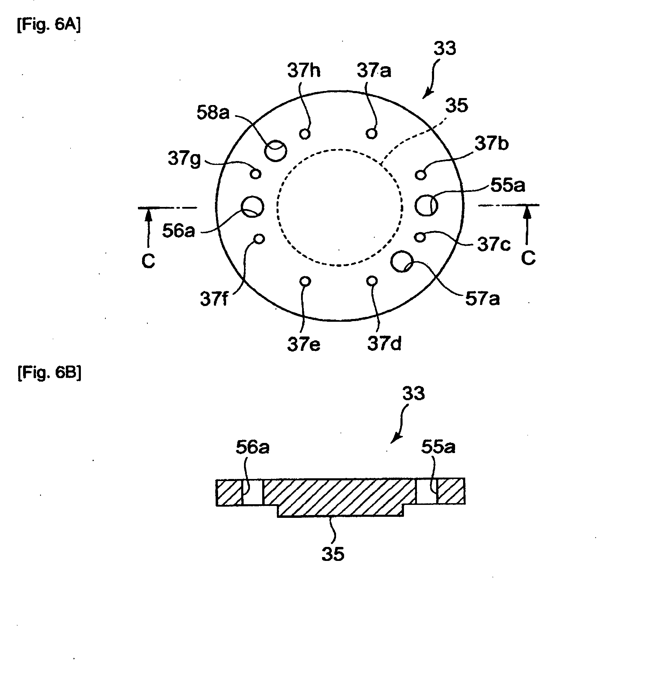

The chamber forming part 27 of the piston 18 is configured to include a body portion 32 and a cover portion 33. Fig. 5A is a top view of the body portion 32 from the outside in the radial direction of the ring cam 22. Fig. 5B is a cross-sectional view taken by line B-B of Fig.5A. Fig. 6A is a top view of the cover portion 33 from the outside in the radial direction of the ring cam 22. Fig. 6B is a cross-sectional view taken by line C-C of Fig.6A.

The body portion 32 has a cylindrical shape and is connected to the roller holding part 28 via the stepped portion 31. The cover portion 33 forms a part of the working chamber 20 and is attached to the body portion 32 from the working chamber side. The body portion 32 has a recess 34 formed on a side facing the cover portion 33 and, the cover portion 33 has a projection 35 corresponding to the recess 34. The body portion 32 and the cover portion have bolt holes 36a to 36h and 37a to 37h, respectively, formed around the circumference in the axial direction of the cylinder 19 so that bolts not shown are insertable therein.

By fitting the projection 35 in the recess 34, a relative position between the body portion 32 and the cover portion 33 is regulated. This facilitates a positioning operation performed by workers when assembling and disassembling the body portion 32 and the cover portion 33 during the maintenance.

Further, by putting screws in the bolt holes 36a to 36h and 37a to 37h, the cover portion 33 is fixed with respect to the body portion 32. As a result, even in the case where the chamber forming part 27 is constituted of a combination of separate parts, i.e. the body portion 32 and the cover portion 33, it is possible to prevent the parts being displaced from each other in the cylinder 19.

The piston ring groove 29 is formed by the body portion 32 and the cover portion 33 combined in the above fashion. In the embodiment, a notched portion 41 is formed on an outer edge of the body portion 32 on the working chamber side. When the notched portion 41 is combined with the surface of the cover portion 33, a piston ring groove 29 is formed. In order to replace the piston ring fitted in the piston ring groove 29, the cover portion 33 is removed from the body portion 32 and the piston ring becomes easily accessible. As a result, it is possible to reduce the workload.

Further, the body portion 32 and the roller holding part 28 may be formed separately or integrally.

Alternatively, a radially outer edge of the cover portion 33 may be notched on the inner side facing in the radial direction towards the ring cam 22 to form a notched portion. The notched portion of the cover portion 33 and the outer surface of the body portion 32 in the radial direction facing away from the ring cam 22 may be combined to form the piston ring groove 29. Alternatively, the circumferential outer edge of the body portion 32 on the outer side facing in the radial direction away from the ring cam 22, and the circumferential outer edge of the cover portion 33 on the inner side facing in the radial direction towards the ring cam 22 may be notched, respectively, and the piston ring groove 29 may be formed by combining the notched portions.

Inner passages 55 to 58 are formed in the piston, in which operating oil flows from the working chamber 22. More specifically, in the chamber forming part, the inner passages 55a to 58a are formed in the cover portion 33, the inner passages 55b to 58b are formed in the body portion 32, and the inner passages 55c to 58c are formed in the roller holding part 28. These sections a, b, and c of the inner passages communicate with corresponding inner passages inside the piston 18, thereby forming the complete inner passages 55 to 58.

Further, an orifice may be provided in each of the inner passages 55 to 58 to regulate the flow of the operation oil supplied to or from the working chamber 20.

The inner passages 55 and 56 communicate with grooves 60A and 60B, respectively, formed on the engagement surface 30. As shown in Fig.4C, the grooves 60A and 60B include annular groove portions 61A and 61B and communication groove portions 62A and 62B formed along the rotational direction of the roller 21 to traverse the annular groove portions 61A and 61B, respectively. The inner passages 55 and 56 communicate with supply openings 63A and 63B formed either in the communication groove portions 62A and 62B respectively, or anywhere in either of the merging sections 64B and 64C.

The operation oil is supplied to the communication groove portions 62A and 62B of the grooves 60A and 60B via the inner passages 55 and 56, respectively. The communication groove portions 62A and 62B are formed to traverse the annular prove portions 61A and 61B, respectively, along the rotational direction of the roller 21. Thus, the communication groove portions 62A and 62B include a plurality of merging sections 64A to 64D. Therefore, the operating oil supplied from the inner passage 55 is introduced to each of different parts of the annular groove portion 61A via the communication groove portion 62A. Further, the operating oil supplied from the inner passage 56 is introduced to each of different parts of the annular groove portion 61B via the communication groove portion 62B.

Upon rotation of the roller 21, the operating oil inside the grooves 60A and 60B is drawn to the engagement surface 30 to create the hydrostatic oil pressure there. This hydrostatic oil pressure supports the large load applied to the roller 21 from the cam 22. Then, for the amount of the operating oil drawn to the engagement surface 30 from the grooves 60A and 60B, the grooves 60A and 60B are refilled so as to always create the hydrostatic oil pressure.

By introducing the operating oil supplied from the inner passage 55, 56 to the different parts of the annular groove portion 61A, 61B via the communication groove portion 62A, 62B and by effectively spreading the operating oil throughout the groove 60A, 60B, it is possible to replenish the operating oil to the groove 60A, 60B effectively and also to form the hydrostatic oil pressure film thereon in a stable manner.

As described above, the operating oil is drawn from the groove 60A, 60B to the engagement surface 30 by the rotation of the roller 21 so as to form the fluid film which creates the hydrostatic oil pressure. As the grooves 60A and 60B include the annular groove portions 61A and 61B and thus, each include a plurality of groove sections extending in a direction transverse to the rotation direction of the roller 21 (see Fig.4C, 66a to 66d). From these grooves, the operating oil is introduced onto the engagement surface 30 by the rotation of the roller 21, thereby creating the hydrostatic oil pressure on the engagement surface 30.

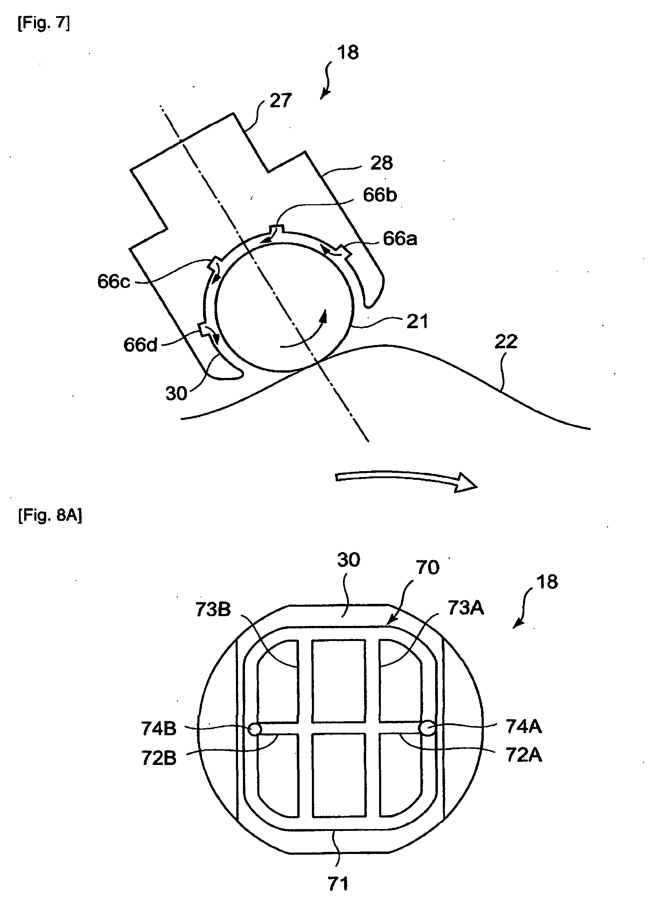

Fig. 7 is a cross-sectional view of the piston 18 and the roller 21, schematically showing a mechanism for generating the hydrostatic oil pressure on the engagement surface 30.

When the ring cam 22 rotates in the direction of the arrow, the roller 21 rotates in the opposite direction. On the engagement surface 30 of the piston 18, the grooves 60A and 60B are filled with the operating oil. In Fig.7, the groove sections 66a to 66d disposed perpendicular to the rotation direction of the roller. Operating oil filling the groove sections 66a to 66d has viscosity and thus, is drawn onto the engagement surface 30 toward a downstream side (see the arrow in Fig.7) in the rotation direction of the roller 2 in response to the rotation of the roller 21. As a result, the fluid film is formed on the engagement surface 30 and thus, it is possible to obtain the hydrostatic oil pressure.

According to the embodiment, the operating oil is effectively introduced to the entire grooves 60A and 60B formed on the engagement surface 30 and the hydrostatic oil pressure is generated thereon. As a result, the wear in the engagement surface 30 is reduced and the enhanced lifetime is enhanced.

Fig.8A to Fig.8D show different designs of the groove formed on the engagement surface 30. Fig.8A shows a single groove 70 formed on the engagement surface 30. The groove 70 includes a an annular groove portion 71, a first communication groove portion traversing the annular groove portion 71 along the rotation direction of the roller 21, and second communication groove portions 73A, 73B traversing the annular groove portion 71 and the first communication groove portion 72 along the direction perpendicular to the rotation direction of the roller 21. The inner passages 55, 56, respectively, communicate with supply openings 74A, 74B formed at both ends of the first communication groove portion 72A, 72B. In this manner, by providing a plurality of the supply openings 74A, 74B for the single groove 70, the operating oil supplied from the working chamber 20 can be spread efficiently to the entire groove 70.

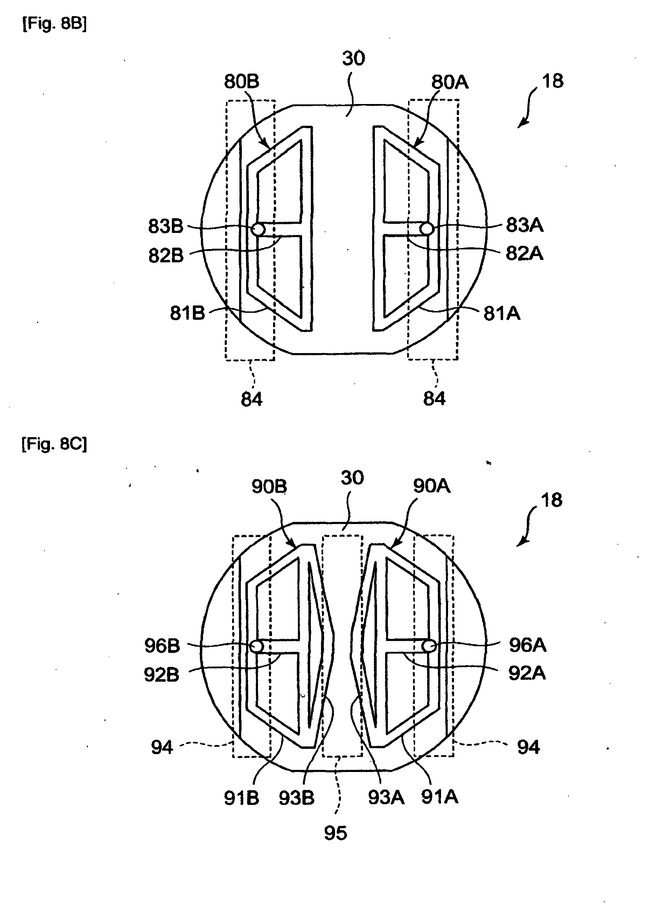

Further, the groove 70 is configured with the second communication groove portions 73A, 73B extending perpendicularly to the rotation direction of the roller 1 and thus, the operating oil can be drawn onto at least part of the engagement surface 30 efficiently by the rotation of the roller 21 so as to form the hydrostatic oil pressure film. Fig.8B shows two grooves 80A, 80B formed on the engagement surface 30 in a fashion similar to Fig.4C. The grooves 80A, 80B include annular groove portions 81A, 81B and communication groove portions 82A, 82B formed along the rotational direction of the roller 21 to traverse the annular groove portions 81A, 81B, respectively. The inner passages 55, 56 communicate with supply openings 83A, 83B formed in the communication groove portions 82A, 82B, respectively.

In this example, the grooves 80A, 80B are formed farther from the cylinder axis than the grooves 60A, 60B shown in Fig.4C and are formed at least in an area 84 including a line of intersection between the engagement surface 30 and a plane perpendicular to the center axis of the cylinder 19 and including the rotation axis of the roller 21.

The pressing force is loaded from the ring cam 22 in the area 84 including the line of intersection between the engagement surface 30 and the plane perpendicular to the center axis of the cylinder 19 and including the rotation axis of the roller 21. The pressing force includes a large component of the direction perpendicular to the cylinder axis and thus, the wear easily develops in the area 84. In this example, by forming the grooves 80A, 80B in the area where the wear easily develops, the hydrostatic oil pressure film is formed there and the wear in the engagement surface 30 can be effectively reduced.

Fig.8C shows two grooves 90A, 90B formed on the engagement surface 30 in a fashion similar to Fig.4C. The grooves 90A, 90B include annular groove portions 91A, 91B and communication groove portions 92A, 92B formed along the rotational direction of the roller 21 to traverse the annular groove portions 91A, 91B, respectively. The inner passages 55, 56 communicate with supply openings 93A, 93B formed in the communication groove portions 92A, 92B, respectively.

In Fig.8C, extension grooves 90A, 90B also includes extension groove portions 93A, 93B extending on the engagement surface 30 from the annular groove portions 91A, 91B toward the cylinder axis. In other words, the engagement surface 30 has a first area 94 including the line of intersection between the engagement surface 30 and the plane perpendicular to the center axis of the cylinder 19 and including the rotation axis of the roller 21 and a second area 95 including an intersection between the center axis of the cylinder 19 and the engagement surface 30, and the grooves 90A, 90B extend from the first area 94 toward the second area 95.

By forming the grooves 90A, 90B in this manner, the hydrostatic oil pressure film can be formed over a large area of the engagement surface 30, thereby supporting the load from the ring cam 22.

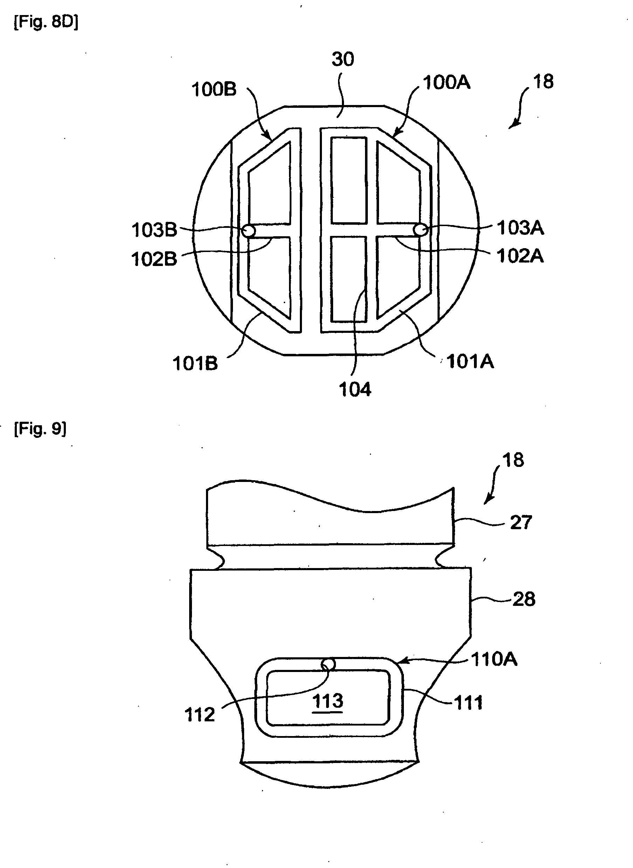

Fig.8D shows two grooves 100A, 100B formed on the engagement surface 30 in a fashion similar to Fig.4C. The grooves 100A, 100B include annular groove portions 101A, 101B and communication groove portions 102A, 102B formed along the rotational direction of the roller 21 to traverse the annular groove portions 101A, 101B, respectively. The inner passages 55, 56 communicate with supply openings 103A, 103B formed in the communication groove portions 102A, 102B, respectively. Further, in Fig.8D, the groove 100A formed on an upstream side in the rotation direction of the roller 21 is formed larger than the groove 100B formed on a downstream side.

As described above, in accordance with a rotation phase of the ring cam 22, the position on the engagement surface 30 subjected to the pressing force changes along the rotation direction of the roller 21 and the piston 18 cyclically reciprocates in the cylinder 19. During a pump stroke where the piston 18 moves from a bottom dead center toward a top dead center, the pressing force from the roller 21 acts in an area of the engagement surface 30 where the groove 100A is formed (an upstream side of the engagement surface 30 from the cylinder axis in the rotation direction of the roller 21). In contrast, during an intake stroke where the piston 18 moves from the top dead center toward the bottom dead center, the pressing force from the roller 21 acts in an area of the engagement surface 30 where the groove 100B is formed (a downstream side of the engagement surface 30 from the cylinder axis in the rotation direction of the roller 21). Further, the engagement surface 30 is subjected to larger pressing force during the pump stroke where the piston 18 moves from the bottom dead center toward the top dead center than during the intake stroke where the piston 18 moves from the top dead center toward the bottom dead center.

In Fig.8D, in view of the fact that the large load is added on the upstream side of the engagement surface 30 from the cylinder axis in the rotation direction of the roller 21 when the piston 18 moves from the top dead center to the bottom dead center, the groove 100A formed on such area is larger than the groove 100B. As a result, in both of the areas on the upstream and downstream sides of the engagement surface 30 from the cylinder axis in the rotation direction of the roller 21, the hydrostatic oil pressure can be sufficiently formed to support the load from the ring cam 22.

Further, the groove 100A formed larger than the groove 100B includes a second communication groove portion 104 extending perpendicularly to the rotation direction of the roller 21. As a result, the operating oil can be drawn onto the engagement surface 30 efficiently by the rotation of the roller 21 and the hydrostatic oil pressure is generated there.

As shown in Fig.3 and Fig.4, the inner passages 57 and 58 formed in the piston 18 communicate with outer grooves 110A and 110B formed in the outer periphery of the roller holding part 28. The inner passages 57 and 58 extend in the direction parallel to the cylinder axis inside the chamber forming part 27, and extend diagonally to the cylinder axis in the roller forming part 28 so as to communicate with the outer grooves 110A and 110B.

Fig. 9 is a side view of the piston 18. Fig.9 shows only one side of the piston 18 on which the outer groove 110A is provided but obviously, the other side of the piston 18 on which the outer groove 110B is provided has the same configuration. The outer groove 110A includes an annular groove portion 111 formed on the outer periphery of the piston 18 and a supply opening 112 formed in the annular groove portion 111. The supply opening 112 communicates with the inner passage 57 so that the operating oil is supplied from the working chamber 20 to the annular groove portion 111. In response to the reciprocating motion of the piston 18 in the cylinder 19, the operating oil supplied to the annular groove portion 11 is drawn into a space between the piston 18 and the cylinder 19 from the annular groove portion 11, thereby generating the hydrostatic oil pressure. This counteracts the load acting between the piston 18 and the cylinder 19, thereby reducing the wear of the piston 18 and the cylinder 19.

The surface of the roller 21 is hardened so that the surface is harder than the engagement surface 30. The surface of the roller 21 is, for instance, hardened by carburizing. In this manner, by creating a difference in hardness between the surface of the roller 21 and the engagement surface 30 of the piston 18, the wear of the engagement surface is reduced.

In the embodiment, only the roller 21 is hardened. However, this is not limitative as long as at least one of the roller 21 and the piston 18 is hardened to create the difference in hardness between the roller 21 and the piston 18. More specifically, only the piston 18 may be hardened or both the roller 21 and the piston 18 may be hardened so that the roller 21 and the piston 18 have different hardness.

Further, the roller holding part 28 has a crowned outer periphery whose diameter is reduced with distance from the working chamber 20. In the space between the piston 18 and the cylinder 19, the hydrostatic oil pressure is formed by the operating oil leaking from the working chamber 20 in combination with the movement of the operating oil caused by the reciprocating motion of the piston 18 in the cylinder 19. In the embodiment, by crowning the outer periphery of the roller holding part 28, even when the pressing force from the ring cam 22 causes the piston 18 to incline, the outer periphery of the piston 18 is kept from directly contacting the cylinder surface and the wear of the piston and the cylinder is reduced.

While the present invention has been described with reference to exemplary embodiments, it is obvious to those skilled in the art that various changes may be made without departing from the scope of the invention.

### Reference Signs List

- 1: Wind turbine generator
- 2: Foundation
- 3: Tower
- 4: Nacelle
- 5: Rotor
- 6: Hub
- 7: Blade
- 9: Rotation shaft
- 10: Hydraulic transmission
- 11: Hydraulic pump
- 12: Hydraulic motor
- 13: High pressure oil line
- 14: Low pressure oil line
- 15: Oil line
- 16: Generator
- 18: Piston
- 19: Cylinder
- 20: Working chamber
- 21: Roller
- 22: Ring cam
- 23: High pressure valve
- 24: Low pressure valve
- 25: High pressure communication path
- 26: Low pressure communication path
- 27: Chamber forming part
- 28: Roller holding part
- 29: Piston ring groove
- 30: Engagement surface
- 31: Stepped portion
- 32: Body portion
- 33: Cover portion
- 34: Recess
- 35: Projection
- 36, 37: Bolt hole
- 40: Opening
- 41: Notched portion
- 55 to 58: Inner passage
- 60: Groove
- 61: Annular groove portion
- 62: Communication groove portion
- 63: Supply opening
- 64: Merging section
- 110: Outer groove
- 111: Annular groove portion

## Claims

1. A fluid working machine comprising:
at least one cylinder (19);
at least one piston (18) which reciprocates along an axial direction of the cylinder (19), which forms a working chamber (20) with the cylinder (19) and which comprises a plurality of inner passages (55-58) in which working fluid from the working chamber (20) flows;
at least one roller (21) which is rotatably engaged with the piston (18);
at least one cam (22) which contacts the roller (21) and which rotates with a rotation shaft (9); and
a plurality of grooves (60A,60B,70,80A,80B,90A,90B,100A,100B) which communicates with the inner passage (55-58) on an engagement surface of the piston (18) engaging with the roller (21) and to which the working fluid is introduced via the inner passage from the working chamber (20),
wherein the plurality of grooves comprises a first annular groove portion (61A,71A,81A, 91A, 101A), a second annular groove portion (61B, 71B, 81B, 91B, 101B) disposed on a downstream side of the first annular groove portion in a rotation direction of the roller (21), and a plurality of communication groove portions (62A,62B,72A,72B,82A,82B,92A,92B,102A,102B) which traverse the first annular groove portion and the second annular groove portion, respectively along the rotation direction of the roller (21), and
wherein the plurality of inner passages (55-58) are open to the plurality of communication groove portions, respectively.

2. The fluid working machine according to claim 1,
wherein the piston (18) comprises a plurality of the inner passages (55-58) which correspond to the plurality of the grooves, respectively, and
wherein the working fluid is introduced from the working chamber (20) to the plurality of the grooves via the plurality of the inner passages (55-58), respectively.

3. The fluid working machine according to claim 1,
wherein the first annular groove portion (61A,71A,81A, 91A, 101A) is arranged on the engagement surface (30) on an upstream side from a center axis of the cylinder (19) in the rotation direction of the roller (21) and the second annular groove portion (61B, 71B, 81B, 91B, 101B) is arranged on the engagement surface (30) on a downstream side from the center axis of the cylinder (19) in the rotation direction of the roller (21).

4. The fluid working machine according to claim 1 or 3,
wherein an area surrounded by the first annular groove portion (61A, 71A, 81A, 91A, 101A) is formed wider than an area surrounded by the second annular groove portion (61B, 71B, 81B, 91B, 101B) so that a hydrostatic pressure acting on the engagement surface on an upstream side in the rotation direction of the roller (21) is higher than the hydrostatic pressure acting on the engagement surface on a downstream side in the rotation direction of the roller (21).

5. The fluid working machine according to claim 1,
wherein the engagement surface (30) is a curved surface surrounding the roller (21) along a circumferential direction of the roller (21), and
wherein each of the first annular groove portion (61A,71A, 81A, 91A, 101A) and the second annular groove portion (61B, 71B, 81B, 91B, 101B) is arranged at least in an area including a line of intersection between the engagement surface and a plane which is perpendicular to a center axis of the cylinder and which includes a rotation axis of the roller (21).

6. The fluid working machine according to claim 1,
wherein each of the first annular groove portion (61A, 71A, 81A, 91A, 101A) and the second annular groove portion (61B, 71B, 81B, 91B, 101B) extends from a first area toward a second area on the engagement surface, the first area including a line of intersection between the engagement surface and a plane which is perpendicular to a center axis of the cylinder and includes a rotation axis of the roller (21), the second area including an intersection point between the center axis of the cylinder and the engagement surface.

7. The fluid working machine according to claim 1, further comprising:
a flow-restricting member for adjusting an amount of the working fluid to be introduced through the inner passage.

8. The fluid working machine according to claim 1,
wherein the piston (18) further comprises:
a chamber forming part (27) which forms the working chamber (20) with an inner wall of the cylinder (19); and
a roller holding part (28) which is arranged between the chamber forming part and the cam (22) and which holds the roller (21),
wherein the piston is formed with a stepped portion (31) between the roller holding part (28) and the chamber forming part (27) so that the roller holding part (28) is formed with a larger diameter than the chamber forming part,
wherein the chamber forming part has a piston ring groove (29) which is formed on an outer periphery of the chamber forming part (27) on a working chamber side of the stepped portion, and
wherein, in the piston ring groove (29), a piston ring is provided.

9. The fluid working machine according to claim 8,
wherein the chamber forming part (27) comprises a body portion which is connected to the roller holding part (28) via the stepped portion (31), and a cover portion (33) which is disposed on the working chamber side of the body portion and forms the piston ring groove (29) with the body portion.

10. The fluid working machine according to claim 8,
wherein the roller holding part (28) has a crowned outer periphery whose diameter is reduced with distance from the working chamber (20).

11. A wind turbine generator comprising:
a hub (6) on which the blade (7) is mounted;
a main shaft (9) which is connected to the hub;
a hydraulic pump (11) which is attached to the main shaft;
a hydraulic motor (12) which is driven by pressurized oil supplied from the hydraulic pump; and
a generator (16) which is coupled to the hydraulic motor and which is driven by rotation of the main shaft upon receiving wind on the blade,
wherein at least one of the hydraulic pump and the hydraulic motor is the fluid working machine of claim 1.

## Patentansprüche

1. Fluidarbeitsmaschine, umfassend:
mindestens einen Zylinder (19),
mindestens einen Kolben (18), der sich entlang einer axialen Richtung des Zylinders (19) hin und her bewegt, eine Arbeitskammer (20) mit dem Zylinder (19) bildet und mehrere innere Durchgänge (55-58) umfasst, in denen Arbeitsfluid aus der Arbeitskammer (20) strömt,
mindestens eine Rolle (21), die mit dem Kolben (18) drehbar in Eingriff steht,
mindestens einen Nocken (22), der die Rolle (21) berührt und der sich mit einer Drehwelle (9) dreht, und
mehrere Rillen (60A, 60B, 70, 80A, 80B, 90A, 90B, 100A, 100B), die mit dem inneren Durchgang (55-58) an einer Eingriffsoberfläche des Kolbens (18), die mit der Rolle (21) in Eingriff steht, kommunizieren und zu denen das Arbeitsfluid aus der Arbeitskammer (20) über den inneren Durchgang eingeführt wird,
wobei die mehreren Rillen einen ersten ringförmigen Rillenabschnitt (61 A, 71 A, 81 A, 91 A, 101 A), einen zweiten ringförmigen Rillenabschnitt (61 B, 71 B, 81 B, 91 B, 101 B), der dem ersten ringförmigen Rillenabschnitt in einer Drehrichtung der Rolle (21) nachgelagert ist, und mehrere Kommunikationsrillenabschnitte (62A, 62B, 72A, 72B, 82A, 82B, 92A, 92B, 102A, 102B), die den ersten ringförmigen Rillenabschnitt bzw. den zweiten ringförmigen Rillenabschnitt entlang der Drehrichtung der Rolle (21) queren, umfassen, und
wobei die mehreren inneren Durchgänge (55-58) jeweils zu den mehreren Kommunikationsrillenabschnitten offen sind.

2. Fluidarbeitsmaschine nach Anspruch 1,
wobei der Kolben (18) mehrere innere Durchgänge (55-58) umfasst, die jeweils den mehreren Rillen entsprechen, und
wobei das Arbeitsfluid aus der Arbeitskammer (20) jeweils über die mehreren inneren Durchgänge (55-58) zu den mehreren Rillen eingeführt wird.

3. Fluidarbeitsmaschine nach Anspruch 1,
wobei der erste ringförmige Rillenabschnitt (61 A, 71 A, 81 A, 91 A, 101 A) an der Eingriffsoberfläche (30) auf einer von einer Mittelachse des Zylinders (19) in der Drehrichtung der Rolle (21) vorgelagerten Seite angeordnet ist und der zweite ringförmige Rillenabschnitt (61 B, 71 B, 81 B, 91 B, 101 B) an der Eingriffsoberfläche (30) auf einer von der Mittelachse des Zylinders (19) in der Drehrichtung der Rolle (21) nachgelagerten Seite angeordnet ist.

4. Fluidarbeitsmaschine nach Anspruch 1 oder 3,
wobei ein Bereich, der durch den ersten ringförmigen Rillenabschnitt (61A, 71A, 81 A, 91 A, 101 A) umgeben wird, breiter ausgebildet ist als ein Bereich, der durch den zweiten ringförmigen Rillenabschnitt (61 B, 71 B, 81 B, 91 B, 101 B) umgeben wird, so dass ein hydrostatischer Druck, der auf einer in der Drehrichtung der Rolle (21) vorgelagerten Seite auf die Eingriffsoberfläche wirkt, höher ist als der hydrostatische Druck, der auf einer in der Drehrichtung der Rolle (21) nachgelagerten Seite auf die Eingriffsfläche wirkt.

5. Fluidarbeitsmaschine nach Anspruch 1,
wobei die Eingriffsoberfläche (30) eine gekrümmte Oberfläche ist, welche die Rolle (21) entlang einer Umfangsrichtung der Rolle (21) umgibt, und
wobei jeder aus der Gruppe umfassend den ersten ringförmigen Rillenabschnitt (61A, 71A, 81A, 91A, 101A) und den zweiten ringförmigen Rillenabschnitt (61 B, 71 B, 81 B, 91 B, 101 B) mindestens in einem Bereich angeordnet ist, der eine Schnittlinie zwischen der Eingriffsoberfläche und einer Ebene umfasst, die zu einer Mittelachse des Zylinders im rechten Winkel verläuft und die eine Drehachse der Rolle (21) umfasst.

6. Fluidarbeitsmaschine nach Anspruch 1,
wobei sich jeder aus der Gruppe umfassend den ersten ringförmigen Rillenabschnitt (61 A, 71 A, 81 A, 91 A, 101 A) und den zweiten ringförmigen Rillenabschnitt (61 B, 71 B, 81 B, 91 B, 101 B) von einem ersten Bereich in Richtung eines zweiten Bereichs an der Eingriffsoberfläche erstreckt, wobei der erste Bereich eine Schnittlinie zwischen der Eingriffsoberfläche und einer Ebene umfasst, die zu einer Mittelachse des Zylinders im rechten Winkel verläuft und eine Drehachse der Rolle (21) umfasst, wobei der zweite Bereich einen Schnittpunkt zwischen der Mittelachse des Zylinders und der Eingriffsoberfläche umfasst.

7. Fluidarbeitsmaschine nach Anspruch 1, ferner umfassend:
ein Stromdrosselglied zum Einstellen einer Menge des Arbeitsfluids, welche durch den inneren Durchgang einzuführen ist.

8. Fluidarbeitsmaschine nach Anspruch 1,
wobei der Kolben (18) ferner umfasst:
einen kammerbildenden Teil (27), der die Arbeitskammer (20) mit einer Innenwand des Zylinders (19) bildet, und
einen Rollenhalteteil (28), der zwischen dem kammerbildenden Teil und dem Nocken (22) angeordnet ist und der die Rolle (21) hält,
wobei der Kolben mit einem gestuften Abschnitt (31) zwischen dem Rollenhalteteil (28) und dem kammerbildenden Teil (27) ausgebildet ist, derart, dass der Rollenhalteteil (28) mit einem größeren Durchmesser als der kammerbildende Teil ausgebildet ist,
wobei der kammerbildende Teil eine Kolbenringrille (29) aufweist, die an einem Außenumfang des kammerbildenden Teils (27) auf einer Arbeitskammerseite des gestuften Abschnitts ausgebildet ist, und
wobei in der Kolbenringrille (29) ein Kolbenring vorgesehen ist.

9. Fluidarbeitsmaschine nach Anspruch 8,
wobei der kammerbildende Teil (27) einen Körperabschnitt umfasst, der über den gestuften Abschnitt (31) mit dem Rollenhalteteil (28) verbunden ist, und einen Abdeckabschnitt (33), der auf der Arbeitskammerseite des Körperabschnitts angeordnet ist und mit dem Körperabschnitt die Kolbenringrille (29) ausbildet.

10. Fluidarbeitsmaschine nach Anspruch 8,
wobei der Rollenhalteteil (28) einen kronenförmigen Außenumfang aufweist, dessen Durchmesser mit Entfernung von der Arbeitskammer (20) abnimmt.

11. Windturbinengenerator, umfassend:
eine Nabe (6), an welcher das Rotorblatt (7) angebracht ist,
eine Hauptwelle (9), die mit der Nabe verbunden ist,
eine Hydraulikpumpe (11), die an der Hauptwelle befestigt ist,
einen Hydraulikmotor (12), der durch Drucköl angetrieben wird, das von der Hydraulikpumpe zugeführt wird, und
einen Generator (16), der mit dem Hydraulikmotor gekoppelt ist und der durch Drehung der Hauptwelle nach Auftreffen von Wind an dem Rotorblatt angetrieben wird,
wobei mindestens eines aus der Gruppe umfassend die Hydraulikpumpe und den Hydraulikmotor die Fluidarbeitsmaschine aus Anspruch 1 ist.

## Revendications

1. Machine hydraulique comportant :
au moins un cylindre (19) ;
au moins un piston (18) qui se déplace de manière alternative le long d'une direction axiale du cylindre (19), qui forme une chambre de travail (20) avec le cylindre (19) et qui comporte une pluralité de passages internes (55 à 58) dans lesquels du fluide de travail provenant de la chambre de travail (20) s'écoule ;
au moins un rouleau (21) qui est engagé de façon rotative avec le piston (18) ;
au moins une came (22) qui est en contact avec le rouleau (21) et qui tourne avec un arbre de rotation (9) ; et
une pluralité de rainures (60A, 60B, 70, 80A, 80B, 90A, 90B, 100A, 100B) qui communique avec le passage interne (55 à 58) sur une surface d'engagement du piston (18) engageant le rouleau (21) et vers laquelle le fluide de travail est introduit par l'intermédiaire du passage interne de la chambre de travail (20),
dans laquelle la pluralité de rainures comporte une première partie de rainure annulaire (61A, 71A, 81A, 91A, 101A), une deuxième partie de rainure annulaire (61B, 71B, 81B, 91B, 101B) disposée sur un côté en aval de la première partie de rainure annulaire dans une direction de rotation du rouleau (21), et une pluralité de parties de rainure de communication (62A, 62B, 72A, 72B, 82A, 82B, 92A, 92B, 102A, 102B) qui traversent la première partie de rainure annulaire et la deuxième partie de rainure annulaire, respectivement, le long de la direction de rotation du rouleau (21), et
dans laquelle la pluralité de passages internes (55 à 58) est ouverte vers la pluralité de parties de rainure de communication, respectivement.

2. Machine hydraulique selon la revendication 1,
dans laquelle le piston (18) comporte une pluralité de passages internes (55,58) qui correspondent à la pluralité de rainures, respectivement, et
dans laquelle le fluide de travail est introduit depuis la chambre de travail (20) jusqu'à la pluralité de rainures par l'intermédiaire de la pluralité de passages internes (55 à 58), respectivement.

3. Machine hydraulique selon la revendication 1, dans laquelle la première partie de rainure annulaire (61A, 71A, 81A, 91A, 101A) est disposée sur la surface d'engagement (30) sur un côté en amont d'un axe central du cylindre (19) dans la direction de rotation du rouleau (21) et la deuxième partie de rainure annulaire (61B, 71B, 81B, 91B, 101B) est disposée sur la surface d'engagement (30) sur un côté en aval de l'axe central du cylindre (19) dans la direction de rotation du rouleau (21).

4. Machine hydraulique selon la revendication 1 ou 3, dans laquelle une zone entourée par la première partie de rainure annulaire (61A, 71A, 81A, 91A, 101A) est formée plus large qu'une zone entourée par la deuxième partie de rainure annulaire (61B, 71B, 81B, 91B, 101B) de telle sorte qu'une pression hydrostatique agissant sur la surface d'engagement sur un côté en amont dans la direction de rotation du rouleau (21) est plus grande que la pression hydrostatique agissant sur la surface d'engagement sur un côté en aval dans la direction de rotation du rouleau (21).

5. Machine hydraulique selon la revendication 1, dans laquelle la surface d'engagement (30) est une surface courbe entourant le rouleau (21) le long d'une direction circonférentielle du rouleau (21), et
dans laquelle chacune de la première partie de rainure annulaire (61A, 71A, 81A, 91A, 101A) et de la deuxième partie de rainure annulaire (61B, 71B, 81B, 91B, 101B) est disposée au moins dans une zone comprenant une ligne d'intersection entre la surface d'engagement et un plan qui est perpendiculaire à un axe central du cylindre et qui comprend un axe de rotation du rouleau (21).

6. Machine hydraulique selon la revendication 1, dans laquelle chacune de la première partie de rainure annulaire (61A, 71A, 81A, 91A, 101A) et de la deuxième partie de rainure annulaire (61B, 71B, 81B, 91B, 101B) s'étend depuis une première zone vers une deuxième zone sur la surface d'engagement, la première zone comprenant une ligne d'intersection entre la surface d'engagement et un plan qui est perpendiculaire à un axe central du cylindre et comprend un axe de rotation du rouleau (21), la deuxième zone comprenant un point d'intersection entre l'axe central du cylindre et la surface d'engagement.

7. Machine hydraulique selon la revendication 1, comportant en outre :
un élément de limitation d'écoulement destiné à ajuster une quantité du fluide de travail devant être introduit par le passage interne.

8. Machine hydraulique selon la revendication 1, dans laquelle le piston (18) comporte en outre :
une partie formant une chambre (27) qui forme la chambre de travail (20) avec une paroi intérieure du cylindre (19) ; et
une partie de maintien de rouleau (28) qui est disposée entre la partie formant une chambre et la came (22) et qui maintient le rouleau (21),
dans laquelle le piston est formé avec une partie étagée (31) entre la partie de maintien de rouleau (28) et la partie formant une chambre (27) de telle sorte que la partie de maintien de rouleau (28) est formée avec un plus grand diamètre que la partie formant une chambre,
dans laquelle la partie formant une chambre a une gorge de segment de piston (29) qui est formée sur une périphérie externe de la partie formant une chambre (27) sur un côté de chambre de travail de la partie étagée, et
dans laquelle un segment de piston est prévu dans la gorge de segment de piston (29.

9. Machine hydraulique selon la revendication 8,
dans laquelle la partie formant une chambre (27) comporte une partie de corps qui est reliée à la partie de maintien de rouleau (28) par l'intermédiaire de la partie étagée (31), et une partie de couvercle (33) qui est disposée sur le côté de chambre de travail de la partie de corps et forme la gorge de segment de piston (29) avec la partie de corps.

10. Machine hydraulique selon la revendication 8, dans laquelle la partie de maintien de rouleau (28) a une périphérie extérieure en couronne dont le diamètre est réduit avec la distance par rapport à la chambre de travail (20).

11. Eolienne comportant :
un moyeu (6) sur lequel la pale (7) est montée ;
un arbre principal (9) qui est relié au moyeu ;
une pompe hydraulique (11) qui est fixée sur l'arbre principal ;
un moteur hydraulique (12) qui est entrainé par de l'huile sous pression délivrée par la pompe hydraulique ; et
une génératrice (16) qui est reliée au moteur hydraulique et qui est entraînée par la rotation de l'arbre principal lors de la réception de vent sur la pale,
dans laquelle au moins un de la pompe hydraulique et du moteur hydraulique est la machine hydraulique selon la revendication 1.
